(19) Europäisches Patentamt
European Patent Office
Office européen des brevets

(11) **EP 2 160 857 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(21) Anmeldenummer: **08750293.6**

(22) Anmeldetag: **15.05.2008**

(51) Int Cl.:
*H04L 1/00* ^(2006.01)

(86) Internationale Anmeldenummer:
**PCT/EP2008/055934**

(87) Internationale Veröffentlichungsnummer:
**WO 2009/000597 (31.12.2008 Gazette 2009/01)**

(54) **PRÜFVERFAHREN UND ELEKTRONISCHE SCHALTUNG ZUR SICHEREN SERIELLEN ÜBERTRAGUNG VON DATEN**

CHECKING METHOD AND ELECTRONIC CIRCUIT FOR THE SECURE SERIAL TRANSMISSION OF DATA

PROCÉDÉ DE CONTRÔLE ET CIRCUIT ÉLECTRONIQUE DE TRANSMISSION SÉRIE SÉCURISÉE DE DONNÉES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.06.2007 DE 102007028766**

(43) Veröffentlichungstag der Anmeldung:
**10.03.2010 Patentblatt 2010/10**

(73) Patentinhaber: **Continental Teves AG & Co. OHG 60488 Frankfurt (DE)**

(72) Erfinder:
• **TRASKOV, Adrian 61449 Steinbach (DE)**
• **KABULEPA, Lukusa, Didier 64390 Erzhausen (DE)**

(56) Entgegenhaltungen:
**EP-A- 1 763 168     WO-A-2006/058050
DE-A1- 4 130 907     US-A- 5 001 712**

**EP 2 160 857 B1**

**Beschreibung**

Die Erfindung betrifft ein Prüfverfahren gemäß Oberbegriff von Anspruch 1, eine elektronische Sende- oder Empfangsschaltung oder einen Transceiver, welcher einen Sender und einen Empfänger umfasst, gemäß Oberbegriff von Anspruch 7 sowie deren Verwendung.

Serielle Bussysteme, wie "Controller Area Network" (CAN), Flexray(R) oder "Serial Peripheral Interface" (SPI) werden bereits in der Kraftfahrzeugelektronik zur Vernetzung von elektronischen Steuergeräten oder Mikrocontrollern eingesetzt. Diesen seriellen Bussystemen ist gemein, dass die zu übertragenden Daten in Datentelegramme (Frames) aufgeteilt werden. Jedem Datentelegramm wird eine nach Maßgabe eines Generatorpolynoms errechnete CRC-Prüfsumme angefügt (CRC: Cyclic Redundancy Check). Die CRC-Prüfung von Daten ist unter anderem aus der DE 41 30 907 A1, der EP 1 763 168 A1, der DE 33 35 397 A1 oder der WO 2006/058050 A2 an sich bekannt.

Aus der WO 2006/058050 A2 geht ein CRC-Fehlererkennungssystem hervor, bei dem eine Manipulation von CRC-Daten (CRCcorrupter) vorgenommen wird. Die Manipulation wird durchgeführt, um eine bestimmte Synchronisationsbedingung zu erzeugen oder dem Empfänger besondere Statusinformationen zu übermitteln. Dies hat den Nachteil, dass die CRC-Prüfung zumindest bei der Übertragung einiger Datenpakete nicht aktiv ist. Die Sicherheit der Übertragung wird daher verringert. Ein weiterer Nachteil ist, dass ein tatsächlicher Fehler in den CRC-Daten prinzipiell ein ungewolltes Synchronisationsereignis auslösen kann.

Bekanntlich sind die Mittel zur Erzeugung der CRC-Prüfdaten im allgemeinen als Hardwaremittel implementiert. Die Absicherung der Daten mittels herkömmlicher CRC-Prüfdaten führt nach sich, dass keine hundertprozentige Datenabsicherung erzielt wird. Der verbleibende Restfehler lässt sich für eine vorgegebene Länge von Datentelegrammen entweder analytisch oder durch Simulationen berechnen bzw. abschätzen.

In der weiter oben bereits erwähnten EP 1 763 168 A1 wird zur Verringerung des Restfehlers vorgeschlagen, einen zweiten CRC-Sicherungsanhang zu bilden.

Die Aufgabe der vorliegenden Erfindung besteht ebenfalls darin, den Restfehler bei mit CRC-Prüfdaten abgesicherten seriellen Datenübertragungen gegenüber dem Stand der Technik zu verringern.

Diese Aufgabe wird erfindungsgemäß gelöst durch das Verfahren gemäß Anspruch 1.

Bei dem Prüfverfahren gemäß der Erfindung werden mittels Prüfdaten abgesicherte serielle Daten über einen seriellen Datenbus von einem Sender (303) zu einem Empfänger (304) übertragen. Im Empfänger werden die Daten zumindest zum Teil aufbereitet und mit den übertragenen Prüfdaten zur Erkennung von Übertragungsfehlern verglichen. Dabei werden bei der Aufbereitung der Daten im Empfänger beziehungsweise bei der Erzeugung der Prüfdaten, welche vorzugsweise CRC-Prüfdaten sind, im Sender die gleiche Prüfdatenbildungsmethode zu Grunde gelegt. Die Prüfdatenbildung/-aufbereitung erfolgt mittels Fehlererkennungshardwaremitteln.

Nach dem Verfahren der Erfindung wird ein Fehler in den übertragenen Daten und/oder Prüfdaten durch ein senderseitiges Fehlerstimulationsmittel hervorgerufen. Hierdurch kann die Datenübertragungssicherheit eines seriellen Bussystems verbessert werden, welches zum Beispiel ein herkömmliches, allgemein verwendetes CRC-Generatorpolynom nutzt. Eine Erhöhung der Datenübertragungssicherheit wäre zwar durch den Einsatz eines komplexeren CRC-Polynoms ebenfalls möglich, allerdings würde dies zu einer nicht erwünschten Veränderung des üblichen Polynoms führen.

Vorzugsweise sind im Bereich des Empfängers neben den Fehlererkennungshardwaremitteln außerdem Fehlererkennungssoftwaremittel vorgesehen, mit denen die empfangenen Daten zusätzlich überprüft werden. Mit diesem Verfahrensschritt kann der weiter oben erwähnten Restfehler verringert und damit das Sicherheitsmaß der seriellen Verbindung erhöht werden. Das Softwaremittel ist beispielsweise ein Softwareprogramm, das ein Fehlererkennungsverfahren durchführt, mit dem sich die Fehlerrate senken und somit das Sicherheitsmaß der Übertragung zumindest theoretisch weiter erhöhen lässt.

Ein quantitativer Nachweis oder eine Überprüfung der tatsächlichen Fehlererkennungsrate der zusätzlichen Software-Funktion ist allerdings in der Praxis nur schwer möglich. Wenn im Bereich des Empfängers eine aus Software- und Hardwaremitteln bestehende Fehlerprüfung vorhanden ist, kann ein unabhängiger Test der Zuverlässigkeit und Qualität dieser Mittel während der seriellen Übertragung durch eingespeiste Fehler besonders einfach erfolgen, in dem die Fehler in die zu übertragenden Daten und/oder Prüfdaten gezielt implantiert werden. Die gezielte Implantation (Stimulation) eines Fehlers kann durch ein Fehlerstimulationsmittel im Sender erfolgen. Das Fehlerstimulationsmittel ist bevorzugt als ein Hardwareelement ausgeführt.

Gemäß dem Verfahren nach der Erfindung kann ein zu sendender Datenstrom gezielt mit solchen Fehlern versehen werden, welche durch die zur Erkennung von Fehlern vorgesehene Hardware (zum Beispiel CRC-Erkennungshardware) auf der Empfängerseite nicht erkennbar sind. Auf diese Weise ist es unter anderem möglich, die Fehlererkennungsrate einer zusätzlichen Fehlererkennungssoftware quantitativ zu bestimmen. Durch die gezielte Stimulation solcher nicht erkennbaren Fehler lässt sich außerdem die korrekte Funktion der empfängerseitigen Fehlererkennungshardware überprüfen.

Gemäß einer weiteren bevorzugten Ausführungsform werden bei dem Verfahren nach der Erfindung außerdem spezielle Fehler stimuliert, welche durch die Erkennungshardware im Empfänger - eine fehlerfreie Übertragung vorausgesetzt - mit Sicherheit einen Fehler hervorrufen. Hierdurch lassen sich auf zuverlässige Weise Fehler in der empfängerseitigen Fehlertesthardware erkennen.

Die Erfindung betrifft außerdem eine elektronische Sendeschaltung oder eine Empfangsschaltung gemäß Anspruch 7. Außerdem betrifft die Erfindung einen Transceiver (Busknoten), welcher sowohl eine entsprechende Sende- als auch Empfangsschaltung umfasst. Die Erfindung betrifft bevorzugt daher auch ein serielles Datenübertragungssystem, welches die obigen Schaltungselemente enthält, wobei diese insbesondere so ausgestaltet sind, das sich das erfindungsgemäße Verfahren mit diesem System ausführen lässt.

Die Erfindung bezieht sich schließlich auch auf die Verwendung der erfindungsgemäßen Schaltung in Kraftfahrzeugsteuergeräten, insbesondere in elektronischen Kraftfahrzeugbremssystemen oder elektronischen Kraftfahrzeugssicherheitssystemen.

Weitere bevorzugte Ausführungsformen ergeben sich aus den Unteransprüchen und der nachfolgenden Beschreibung von Ausführungsbeispielen an Hand der Figuren.

Es zeigen

Fig. 1 eine schematische Darstellung zweier kommunizierender Knoten eines standardisierten Bussystems,

Fig. 2 eine weitere schematische Darstellung einer Sende- und Empfangsschaltung (Busknoten) mit einer Darstellung der zur CRC-Berechnung und Überprüfung notwendigen Komponenten,

Fig. 3 ein Beispiel für einen gegenüber Fig. 2 erweiterten Busknoten mit erhöhter Sicherheit,

Fig. 4 eine zeitliche Abfolge zur Erläuterung des Wechsels zwischen Testbetrieb und Normalbetrieb für ein ereignisgesteuertes Protokoll wie CAN,

Fig. 5 ein spezielles Ablaufdiagram der einzelnen Schritte innerhalb der zur Validierung vorgesehenen Zeitschlitze in einem Verfahren gemäß Fig. 4 bei Normalbetrieb (online),

Fig. 6 ein Ablaufdiagram einer (intensiven) Untersuchung der Eignung eines Software-Fehlererkennungsverfahrens als sicherheitstechnische Ergänzung der Hardware-CRC-Überprüfung im Testbetrieb (offline),

Fig. 7 eine Darstellung des Inhaltes eines redundanten Sendepuffers zur Nachbildung von Fehlern mit einer Hammingdistanz von 6 bei einer Datenübertragung über CAN (Controller Area Network) und

Fig. 8 eine zeitliche Abfolge zur Erläuterung des Wechsels zwischen Testbetrieb und Normalbetrieb für ein zeitgesteuertes Protokoll, wie Flexray, im statischen Segment.

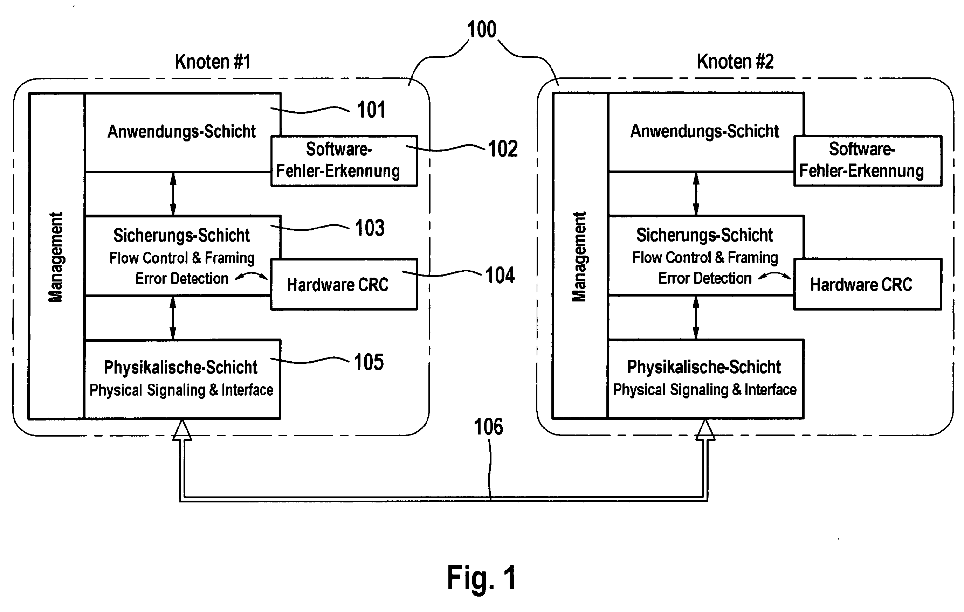

Fig. 1 zeigt ein schematisches Blockschaltbild von Protokollschichten zweier Busknoten 100, die über ein standardisiertes serielles Bussystem 106 kommunizieren. Ein Busknoten bestehend aus Sender und Empfänger (Transceiver) umfasst in der Regel für die Kommunikation einen Mikrokontroller und einem Kommunikationskontroller. Hierbei kann der Kommunikationskontroller in dem Mikrokontroller integriert sein. Einem Knoten 100 lassen sich drei Protokollschichten zuordnen:

- Anwendungsschicht 101,
- Sicherungsschicht 103 und
- physikalische Schicht 105 zur Übertragung der Bits.

Die Applikationsschicht 101 wird als eine Software realisiert, während Sicherungsschicht 103 und Bitübertragungsschicht 105 in Hardware abgebildet werden. Die CRC-Berechnung und Überprüfung erfolgen in der Sicherungsschicht 103 und werden in dem CRC-Hardware-Modul 104 abgewickelt. Mit einem geeignet ausgewählten CRC-Polynom kann das CRC Hardware-Modul 104 Fehler, die während einer Datenübertragung auf dem Bus 106 auftreten, mit einem hohen Abdeckungsgrad erkennen. Um ein hohes Sicherheitsniveau bei der Übertragung zu erreichen, wird neben der Hardware-CRC-Prüfung noch das Software-Fehlererkennungsverfahren 102 in der Applikationsschicht 101 implementiert.

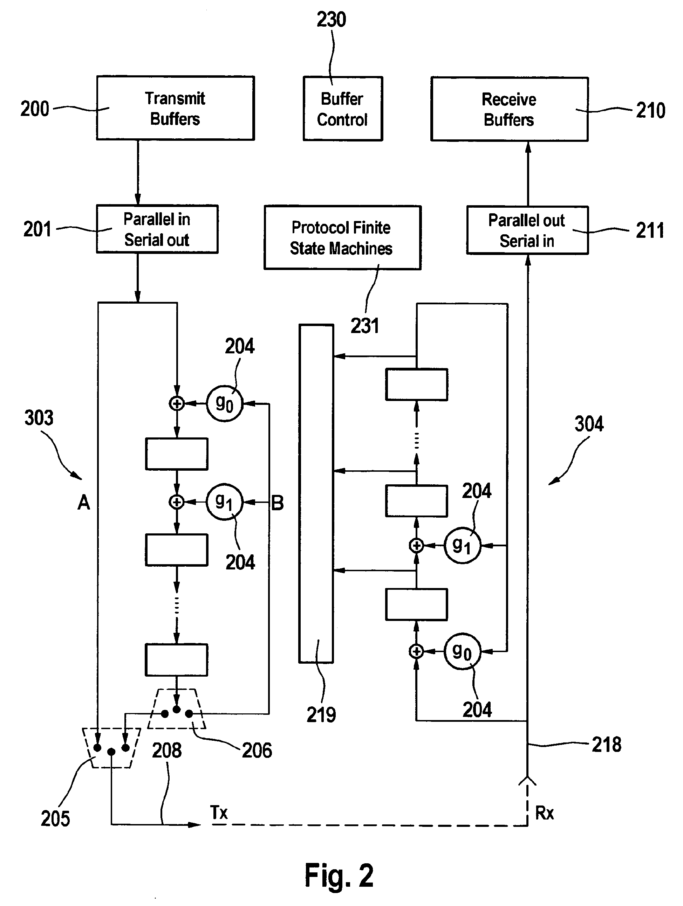

Fig. 2 zeigt schematisch Funktionsblöcke eines an sich bekannten Bussystems mit Sender und Empfänger, welche zur CRC-Berechnung- und Überprüfung benötigt werden. Auf der Senderseite 303 (siehe Ausgangsleitung Tx) werden zunächst die zu einem Datentelegramm gehörenden Datenbytes in Sendepuffer 200 geschrieben. Nach einer parallel-seriell Umwandlung in Block 201 werden die zu übertragenden Bits seriell durch die Sendeleitung TX 208 an die Bitübertragungsschicht 105 (Fig. 1) weitergegeben (Zweig A). Während der Übertragung wird für die übertragenen Daten die CRC-Prüfsumme in dem parallelen Zweig B berechnet. Hierzu erfolgt eine Bildung des CRC-Polynoms mittels Schieberegistern und einer Rückkopplung unter Verwendung der CRC-Polynomkoeffizienten 204. Nachdem das letzte Datenbit von einem Datentelegramms in der Bitübertragungsschicht 105 (Fig. 1) angekommen ist, werden die Multiplexer 205 und 206 so umgeschaltet, dass die Bits der CRC-Prüfsumme auch seriell an die Bitübertragungsschicht 105 weitergegeben werden.

Auf der Empfängerseite 304 (siehe Eingangsleitung Rx) wird die empfangene serielle Bitfolge einer Seriell-Parallel-Umwandlung unterzogen und in die Sicherungsschicht 103 eingespeist. Für die empfangenen Datenbits wird eine CRC-Prüfsumme errechnet. Der Vergleicher 219 stellt fest, ob die errechnete und die empfangene CRC-Prüfsumme übereinstimmen. Bei Nichtübereinstimmen liegt ein Übertragungsfehler vor. Die Steuerung des Funktionsablaufs im Sender und Empfänger erfolgt durch einem endlichen, insbesondere gemeinsamen, Zustandsautomaten 231. Dieser wirkt mit Puffersteuerung 230 in geeigneter Weise zusammen.

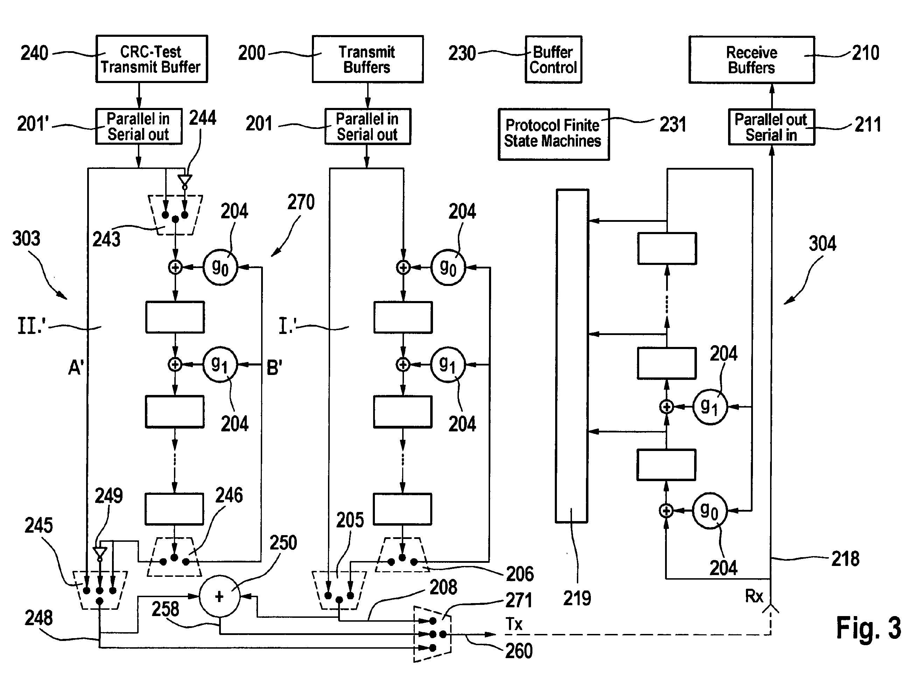

Auf der Senderseite 303 des in Fig. 3 dargestellten Busknotens ist zusätzlich ein redundanter (Doppel-) Pfad II. implementiert. Dieser redundante Pfad II. besteht aus einem Sendepuffer für einen CRC-Test 240, einem Parallel-Seriell-Umwandler 201' und einem eigenen CRC-Hardware-Modul 270. Im Signalpfad, der Multiplexer 243 folgt, können die zu sendenden Bits entweder direkt oder über Inverter 244 in negierter Form in die CRC-Berechnung eingehen. Die Ausgangsleitung 248 des redundanten CRC-Berechnungspfades B' wird mit der Sendeleitung 208 der herkömmlichen CRC-Hardware-Implementierung an den Eingängen eines XOR-Gatters 250 angeschlossen. Ausgang 258 des XOR-Gatters bildet dann eine zusätzliche Sendeleitung. An Hand des Multiplexers 271 kann die Steuereinheit des laufenden Protokolls festlegen, welche Ausgangsleitung (208, 248 oder 258) an die Sendeleitung Tx weitergeschaltet wird. Ausgangsleitung 258 spiegelt die theoretische Eigenschaft von CRC-Prüfalgorithmen wieder, wonach eine XOR-Verknüpfung von zwei gültigen CRC-Kodes auch wiederum einen gültigen CRC-Kode darstellen muss. Durch diese Ausgangsleitung kann ein Datentelegramm gezielt so verfälscht werden, dass die Hardware-CRC-Überprüfung auf der Empfängerseite 304 den implantierten Fehler nicht erkennen kann.

Eine Fehlererkennung mittels der CRC-Prüfung im Empfänger 304 ist bei einer mit Übertragungsfehlern behafteten Bitfolge dann nicht möglich, wenn die Bitfolge ein gültiges Kodewort des ausgewählten Generatorpolynoms ist. Die in Fig. 3 dargestellten Funktionsblöcke ermöglichen eine Überprüfung des in Software implementierten Fehlererkennungsverfahren 102. Genauer gesagt kann festgestellt werden, ob und wie groß Lücken für eventuelle Fehler sind, die von der CRC-Hardware nicht erfasst werden können. Die Nachbildung eines "künstlichen" Fehlers wird anhand der XOR-Verknüpfung 250 von einem gespeicherten CRC-Kodewort mit der zu sendenden Bitfolge implementiert. Diese Operation beruht auf der Eigenschaft, dass die CRC-Berechnung einer XOR-Verknüpfung von zwei Kodeworten auch ein Kodewort des betrachteten CRC-Polynoms liefert. Dieses Stimulationsmittel ist im wesentlichen in Hardware implementiert, wobei vorzugsweise zusätzlich eine Softwareschnittstelle vorgesehen ist, mit der die zu verfälschenden Bitstellen angegeben werden können.

Es besteht nun das Ziel, auch die implantierten Fehler, die von der CRC-Überprüfung unentdeckt bleiben, mit dem Fehlererkennungsverfahren 102, das als Software ausgeführt ist, sicher zu erkennen. Ist dies nicht der Fall, ergeben sich Sicherheitslücken, welche schwer quantifizierbar sind. Eine weitere Verbesserung der Sicherheit ergibt sich durch eine Überprüfung der CRC-Hardware, insbesondere des Vergleichers 219, im Empfänger selbst. Falls Vergleicher 219 die Validierung der CRC-Überprüfung nicht oder fehlerhaft durchführt, werden die fehlerhaften Daten unter Umständen unbemerkt weiterübertragen. Die Funktionsgruppen der Schaltung gemäß Fig. 3 ermöglichen zu diesem Zweck außerdem, im Sender 303 gezielt die Prüfsumme eines Datentelegramms zu verfälschen. Dementsprechend wird erwartet, dass der Empfangsknoten die Erkennung eines CRC-Fehlers in einem anderen Datentelegramm bestätigt. Diese Bestätigung weist dann auf die Verfügbarkeit der CRC-Überprüfung im Empfangsknoten hin. Zwei Möglichkeiten zur Verfälschung der CRC-Prüfsumme sind in Fig. 3 dargestellt. Eine erste Möglichkeit besteht darin, negierte Bits mittels des Multiplexers 243 und des Inverters 244 in die CRC-Hardware einzuspeisen. Diese Möglichkeit kann verwendet werden, falls ein nur aus Bits mit dem logischen Wert "1" bestehender Bitvektor bei einer vorgegebenen Länge keinen gültigen Kode des ausgewählten CRC-Polynoms darstellt. Für die zweite Möglichkeit wird die Prüfsumme vor der Übertragung negiert. Dies kann mit Multiplexer 245 und Inverter 249 erfolgen.

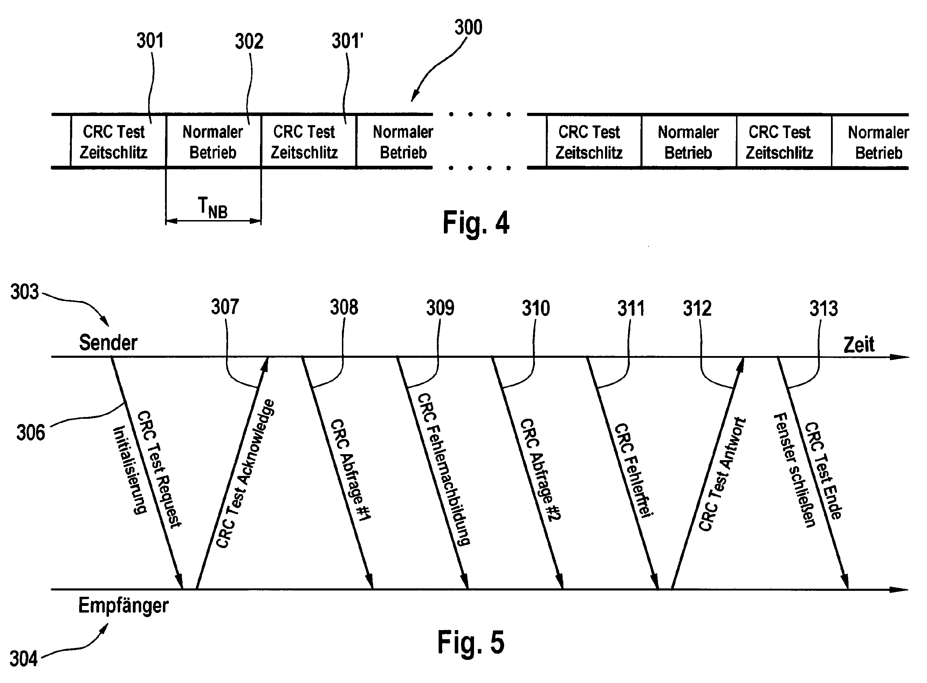

In Fig. 4 sind Zeitschlitze für die Realisierung von CRC-Tests während einer seriellen Übertragung, also "online", dargestellt. Der Datenstrom 300 wird zeitlich in gleich lange Einheiten der zeitlichen Länge $T_{NB}$ aufgeteilt (Zeitschlitze für Normalbetrieb 302 und Testbetrieb 302). Es ist zweckmäßig, die Zeitschlitze 302 für den Normalbetrieb länger vorzusehen, als die Zeitschlitze 301, damit die Übertragungsrate des seriellen Bussystems nicht übermäßig durch die sich regelmäßig wiederholenden Tests beeinträchtigt wird.

Fig. 5 dient zur näheren Erläuterung des Testzyklusses 301 innerhalb des Datenstroms 300 in Fig. 4. Zunächst sendet der Sender 303 einen speziellen Startkode 306 zum Empfänger 304, welcher den Beginn des "online"-Tests signalisiert. Innerhalb eines Bussystems mit mehreren Busknoten muss für den Test genau ein Sender und ein Empfänger ausgewählt sein. Mit einer Quittungsbotschaft 307 kann der für den Test ausgewählte Empfänger 304 seine Bereitschaft zum Test bestätigen. Nach der Quittungsbotschaft sendet der prüfende Knoten 303 vier Datentelegramme hintereinander:

- Zwei Botschaften 308 und 310, die jeweils eine fehlerhafte Prüfsumme aufweisen;

- eine Botschaft 309, die einen für die CRC-Überprüfung unerkennbaren Fehler beinhaltet und

- eine Botschaft 311, die fehlerfrei ist.

Die Reihenfolge der Botschaften 308, 309 und 310 kann beliebig gewählt werden. Die vierte Botschaft 311 beinhaltet ein Bitmuster, welches eine Antwort 312 vom am Test beteiligten Empfänger anfordert. Als Antwort auf die Folge von Testbotschaften liefert der getestete Empfangsknoten 304 ein Bitmuster 312, das eine Information über die Reihenfolge der Botschaften 308, 309 und 310 enthält. Anschließend sendet der während des Tests sendende Knoten 303 eine Sonderbotschaft 313, um den Testvorgang damit den Testzeitschlitz 301 zu beenden. Falls die Antwort auf eine Anfrage länger als eine festgelegte Zeitspanne dauert, beendet der für den Test vorgesehene Empfänger 304 den Testvorgang. Ein neuer Testvorgang erfolgt erst wieder im folgenden Testzeitschlitz 301' (Fig. 4). Der prüfende Knoten 303 besitzt eine Einrichtung zum Speichern alle Fehler, die in CRC-Testzeitschlitzen festgestellten wurden. Diese können dann später bei Wartungsarbeiten ausgelesen werden. Bevorzugt wird, falls eine fehlende Verfügbarkeit der CRC-Überprüfung in mindestens zwei hintereinanderfolgenden Zeitschlitzen festgestellt wird, der Fehler in die auf dem prüfenden Konten laufende Software beispielsweise interruptgesteuert eingetragen. Dies ermöglicht eine geeignete Reaktion durch die Software des Busknotens, um eine ausreichende Datensicherheit aufrechtzuerhalten.

Neben der vorstehend beschriebenen Einkapselung der CRC-Überprüfung kann die Wahrscheinlichkeit einer aufgrund von Übertragungsfehlern misslungenen Verfälschung einer CRC-Summe vorteilhaft dadurch besonders gering gehalten werden, indem zwei verschiedenen Botschaften mit falschen CRC-Summen innerhalb des CRC-Überprüfungszeitfensters gesendet werden. Hierbei wird insbesondere die zweite Botschaft als bitinvertierte Information der ersten Botschaft gebildet, während die CRC-Summen der beiden Botschaften vertauscht werden. Diese Ausgestaltung lässt sich vorteilhaft mit minimalem Aufwand in herkömmliche Implementierungen von Kommunikationskontrollern für serielle Bussysteme einbauen.

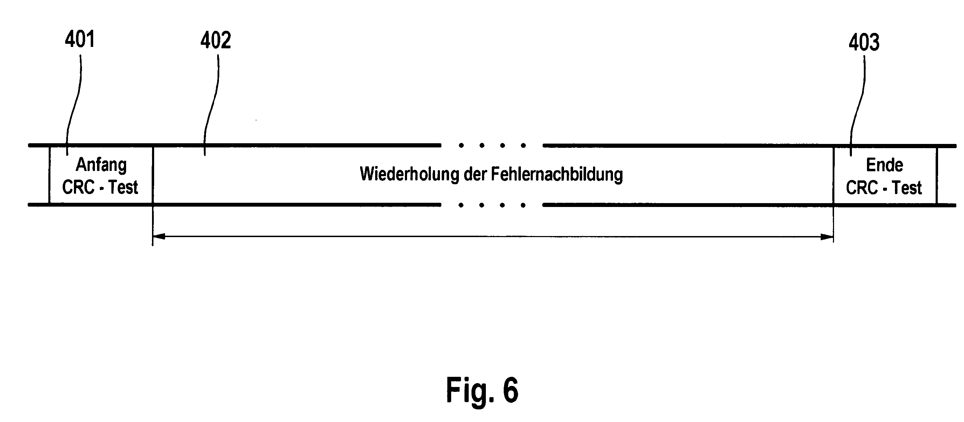

Nachfolgend wird an Hand von Fig. 6 ein Beispiel für ein "offline"-Verfahren dargestellt. Während des "offline"-Betriebs werden lediglich Tests durchgeführt. Während des Tests werden lediglich Testdaten übertragen. Der "Offline"-Betrieb dient zur Überprüfung der tatsächlichen Fehlererkennungsrate der Fehlererkennungssoftware 102 (Fig. 3). Zunächst sendet Sender 303 einen speziellen Startkode (Zeitschlitz 401), welcher den Beginn der "offline"-Überprüfung signalisiert. Im Zeitbereich 402 werden ausschließlich stimulierte Datenfehler über die serielle Verbindung übertragen. Der Test wird durch einen speziellen Endekode (Zeitschlitz 403) beendet. Durch die "offline"-Überprüfung können in kurzer Zeit sehr viel mehr Bitpakete geprüft werden, als während einer Überprüfung während einer laufenden seriellen Datenübertragung ("online"). Auch hier kann durch die spezielle Art der stimulierten Fehler einer Überprüfung der Fehlererkennungsqualität unabhängig von der Hardware-Erkennung des Empfängers durchgeführt werden.

Nach einer bevorzugten Ausführungsform des Verfahrens wird die oben beschriebene "offline"-Überprüfung zunächst durch Stimulation von Fehlern mit kleinen oder kleinsten Hammingdistanzen begonnen. Hierzu umfasst der Sender bevorzugt ein Mittel zur Einstellung der Hammingdistanz von stimulierten Fehlern (z.B. durch ein für den CRC-Test ausgelegtes Softwareprogramm im testenden Sender). Im Empfänger wird dann überprüft, ob der stimulierte Fehler durch die Erkennungssoftware detektiert wurde. Wurde ein Fehler nicht detektiert, handelt es sich um eine Überprüfungslücke der Fehlererkennungssoftware des Empfängers. Eine besonders zweckmäßige Suche nach Überprüfungslücken lässt sich durchführen, in dem zunächst Fehler mit kleiner Hammingdistanz erzeugt werden und dann die Hammingdistanz progressiv erhöht wird. Auf Grund der sehr großen Zahl von möglichen Fehlern kann so eine aussagekräftige statistische Analyse der Häufigkeit von Überprüfungslücken erfolgen. An Hand der weiter oben beschriebenen Nachbildung von seltenen CRC-Fehlern können Software-Fehlererkennungsmechanismen vorteilhaft so ausgelegt werden, dass jede beliebige Anzahl von falschen Bitstellen unter einem bestimmten Schwellenwert detektiert wird. Der Schwellenwert kann je nach der angestrebten Sicherheitsstufe beliebig festgelegt werden.

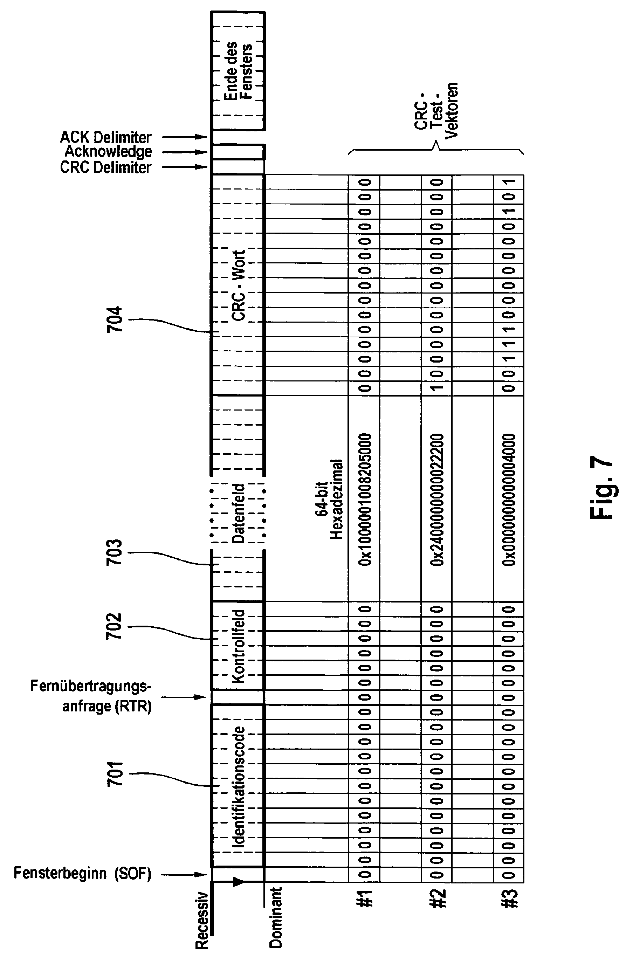

In Fig. 7 sind binäre Dateninhalte des CRC-Test-Sendepuffers 240 für das Beispiel einer Übertragung über einen CAN-Bus dargestellt. Die dargestellten drei Bit-Vektoren (#1 bis #3) sind so erzeugt (stimuliert), dass sie eine CRC-Überprüfungslücke mit einer Hammingdistanz von 6 stimulieren. Hierbei kann die Fehlerstimulation sowohl während einer "online"-Prüfung gemäß den Beispielen in Fig. 4 und 5 als auch während einer "offline"-Prüfung gemäß dem Beispiel in Fig. 6 erfolgen. Im dargestellten Format von CAN-Datentelegrammen entsprechen die Botschaftkennung 701, das Kontrollfeld 702 und das Datenfeld 703 dem Inhalt des CRC-Test-Sendepuffers 240. Das CRC-Prüfwort 704 wird für den Inhalt des CRC-Test-Sendepuffers 240 berechnet. Ein logischer wert "1" im CRC-Test-Sendepuffers 240 weist darauf hin, dass die entsprechende Bitstelle im Senderpuffer 200 während der Übertragung verfälscht wird. Mit dem Bit-Vektor #1 wird ein Fehler nur in einem Datenfeld von 64 Bit nachgebildet, während die Bit-Vektoren auch Fehler im CRC-Prüfwort nachbilden.

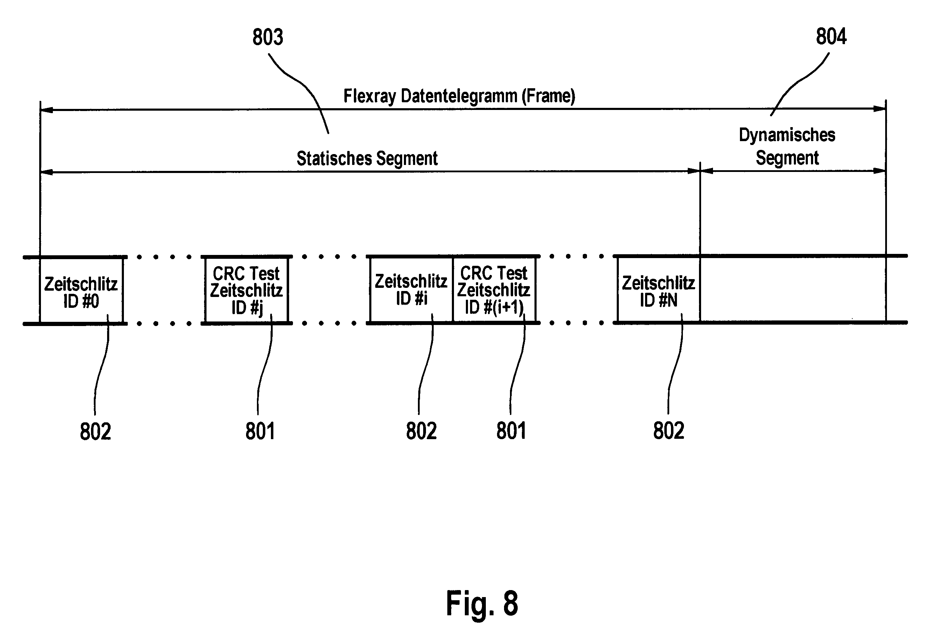

In zeitgesteuerten Protokollen erfolgt die Signalisierung in Zeitschlitzen für die CRC-"online"-Prüfung gemäß einer gegenüber dem Beispiel in Fig. 5 abgewandelten Form. Dabei werden im wesentlichen die Schritte "Fehlernachbildung" 309 und "CRC-Test-Antwort" 312 durchgeführt, wobei diese Schritte verschiedene Zeitschlitze belegen. Zur Durchführung des hier beschriebenen Tests baut der testende Knoten abwechselnd nach einer von ihm bestimmten Reihenfolge Fehler in den vorgesehenen Zeitschlitzen ein. Die Antworten des getesteten Knoten sollen dann die Reihenfolgen des Tests in den vorgesehenen Zeitschlitzen widerspiegeln. In Fig. 8 ist zur Erläuterung dieses Prinzips eine Abfolge von CRC-Test-Zeitschlitzen 801 und den im normalen Betrieb verwendeten Zeitschlitzen 802 für das statisches Segment 803 eines Flexray®-Protokolls dargestellt. Bekanntlich werden einem Flexray®-Zeitschlitz 802 zwei CRC-Prüfsummen zugeordnet. Eine CRC Prüfsumme wird für den Kopfteil (Header) der Botschaft berechnet, während die zweite CRC-Prüfsumme sich auf Nutzdaten einer Anwendung beziehen. Ein CRC-Test-Zeitschlitz 801 kann entweder für die Fehlernachbildung oder für eine CRC-Test-Antwort reserviert werden. Für eine "offline"-Überprüfung der Flexray-CRC besteht ein statisches Segment überwiegend aus CRC-Test Zeitschlitzen. Für den Flexray-Header wird das Generator-Polynom

$$x^{11} + x^9 + x^8 + x^7 + x^2 + 1$$

auf eine Bitfolge von 20 Bits angewandt. Mit einem hexadezimalen Anfangswert von "1A" wird eine minimale Hammingdistanz von sechs erreicht. Hierbei führt nur eine geringe Anzahl von Fehlermustern zu einer Hammingdistanz von 6. Diese Fehlermuster ergeben sich beispielsweise aus einer XODER-Verknüpfung eines der folgenden 10 Vektoren mit den zu sendenden 31 Bit eines Flexray-Headers:

| | Null Frame Indicator | Sync Frame Indicator | Frame ID | Payload length | Header CRC |
|---|---|---|---|---|---|
| #1 | 1 | 1 | 01010000000 | 0100100 | 00000000000 |
| #2 | 1 | 0 | 10011100000 | 0000000 | 00001000000 |
| #3 | 1 | 1 | 00001100001 | 0000100 | 00000000000 |
| #4 | 1 | 0 | 01100000000 | 0111000 | 00000000000 |
| #5 | 0 | 0 | 10111000010 | 1000000 | 00000000000 |
| #6 | 0 | 0 | 10100001100 | 0000001 | 00000100000 |
| #7 | 0 | 0 | 10000100000 | 0010000 | 01001000010 |
| #8 | 0 | 0 | 01000000000 | 0100000 | 00011000101 |
| #9 | 0 | 0 | 00010000001 | 0000001 | 00000000111 |
| #10 | 0 | 0 | 00000100000 | 1001000 | 01000100001 |

An Hand einer "offline"-Überprüfung kann überprüft werden, ob eine Software-Sicherheitsschicht alle mit einer Hammingdistanz von sechs nachgebildeten Fehlermuster erkennt. Hierdurch lässt sich sicherstellen, dass der entsprechende Knoten den Flexray-Header mit einer Hammingdistanz von 8 überträgt und somit eine erhöhte Sicherheitsstufe aufweist. Auf ähnliche Weise kann die tatsächliche Wirksamkeit einer CRC-Absicherung für Flexray-Nutzdaten überprüft werden.

**Patentansprüche**

1. Prüfverfahren, bei dem mittels Prüfdaten abgesicherte serielle Daten über einen seriellen Datenbus (106) von einem Sender (303) zu einem Empfänger (304) übertragen, danach im Empfänger die Daten zumindest zum Teil aufbereitet und diese mit den übertragenen Prüfdaten zur Erkennung von Übertragungsfehlern verglichen werden, wobei im Sender bei der Erzeugung der Prüfdaten als auch im Empfänger bei der Aufbereitung der Daten die gleiche Prüfdatenbildungsmethode zu Grunde gelegt wird, wobei die Prüfdatenbildung/-aufbereitung mittels Fehlererkennungshardwaremitteln erfolgt, und
wobei insbesondere weiterhin im Bereich des Empfängers neben den Fehlererkennungshardwaremitteln außerdem Fehlererkennungssoftwaremittel (102) vorhanden sind, mit denen die empfangenen Daten zusätzlich überprüft werden, **dadurch gekennzeichnet, dass**

ein Fehler in den übertragenen Daten und/oder Prüfdaten durch ein senderseitiges Fehlerstimulationsmittel hervorgerufen wird.

2. Verfahren nach Anspruch 1, **dadurch gekennzeichnet, dass** eine Fehlfunktion oder ein Defekt in den Fehlererkennungshardwaremitteln im Empfänger unter Verwendung der mit dem Fehlerstimulationsmittel erzeugten Datenfehler und/oder Prüfdatenfehler erkannt wird.

3. Verfahren nach Anspruch 1 oder 2, **dadurch gekennzeichnet, dass** die Prüfdaten nach der CRC-Methode gebildet werden.

4. Verfahren nach mindestens einem der Ansprüche 1 bis 3, **dadurch gekennzeichnet, dass** die fehlerhaften Daten durch Modifikation der zu übertragenden Daten mit den Fehlerstimulationsmitteln erzeugt werden.

5. Verfahren nach mindestens einem der Ansprüche 1 bis 4, **dadurch gekennzeichnet, dass** die provozierten Datenfehler derart erzeugt sind, dass die Fehlererkennungshardwaremittel im Empfänger die Datenfehler entweder bei fehlerfreier Übertragung sicher erkennen können oder sicher nicht erkennen können.

6. Verfahren nach mindestens einem der Ansprüche 1 bis 5, **dadurch gekennzeichnet, dass** die Fehlererkennungssoftwaremittel (102) im Empfänger derart ausgeführt sind, dass diese CRC-Datenfehler, die mit einer Hammingdistanz unter einem bestimmten Schwellenwert provoziert sind, immer erkennen.

7. Elektronische Sende- oder Empfangsschaltung oder Transceiver, welcher einen Sender und einen Empfänger umfasst, mit seriellen Datenübertragungsmitteln und jeweils zumindest

   - einer physikalischen Ebene,
   - einer senderseitigen Prüfdatenerzeugungsschaltung,
   - einer empfängerseitigen Prüfdatenvergleichsschaltung und
   - einem im Sender angeordneten Schaltungsmittel (II.) zum Provozieren von fehlerhaften Sendedaten und/oder fehlerhaften Prüfdaten,
   **gekennzeichnet durch** einer auf Softwareebene implementierten unabhängigen, zusätzlichen Fehlererkennung im Bereich des Empfängers.

8. Schaltung nach Anspruch 7, **dadurch gekennzeichnet, dass** senderseitige Umschaltmittel (243, 245, 205, 206, 271) vorhanden sind, mit denen zwischen

   a) der Erzeugung und nachfolgenden Übertragung von fehlerhaften Sendedaten und/oder fehlerhaften Prüfdaten und
   b) der Übertragung von unmodifizierten Daten und Prüfdaten umgeschaltet werden kann.

9. Schaltung nach Anspruch 7 oder 8, **dadurch gekennzeichnet, dass** diese mit Mitteln zur Durchführung des Verfahrens nach mindestens einem der Ansprüche 1 bis 6 versehen ist.

10. Schaltung nach mindestens einem der Anspruch 7 bis 9, **dadurch gekennzeichnet, dass** senderseitig eine erste Datenaufbereitungsstufe (I.) einschließlich einer ersten Prüfdatenerzeugungsschaltung vorgesehen ist, mit der Daten und Prüfdaten ohne provozierte Fehler, also in der Regel fehlerfreie Daten und Prüfdaten, an den Sendeausgang (Tx) weitergeleitet werden können, und senderseitig eine zweite Datenaufbereitungsstufe (II.) mit einer Prüfdatenerzeugungsschaltung vorgesehen ist, wobei die Datenaufbereitungsstufe Stimulationsmittel umfasst, mit der Datenfehler und/oder Prüfdatenfehler erzeugt werden können, welche an den Sendeausgang (Tx) weitergeleitet werden können.

11. Verwendung der Schaltung nach mindestens einem der Ansprüche 7 bis 10 in Kraftfahrzeugsteuergeräten.

**Claims**

1. Checking method in which serial data protected by means of check data are transmitted via a serial data bus (106) from a transmitter (303) to a receiver (304), the receiver then conditions at least some of the data and compares them with the transmitted check data in order to recognize transmission errors, wherein the transmitter bases the production of the check data and the receiver bases the conditioning of the data on the same check data formation method, wherein the check data formation/conditioning is performed using error recognition hardware means, and wherein particularly also the region of the receiver contains not only the error recognition hardware means but also error recognition software means (102) which are used to additionally check the received data,

**characterized in that**

an error in the transmitted data and/or check data is caused by a transmitter-end error stimulation means.

2. Method according to Claim 1, **characterized in that** a malfunction or a fault in the error recognition hardware means is recognized in the receiver using the data errors and/or check data errors produced by means of the error stimulation means.

3. Method according to Claim 1 or 2, **characterized in that** the check data are formed on the basis of the CRC method.

4. Method according to at least one of Claims 1 to 3, **characterized in that** the erroneous data are produced by virtue of the data to be transmitted being modified by means of the error stimulation means.

5. Method according to at least one of Claims 1 to 4, **characterized in that** the data errors provoked are produced such that the error recognition hardware means in the receiver can either safely recognize or safely not recognize the data errors during error-free transmission.

6. Method according to at least one of Claims 1 to 5, **characterized in that** the error recognition software means (102) in the receiver are designed such that they always recognize CRC data errors which are provoked with a Hamming distance below a particular threshold value.

7. Electronic transmission or reception circuit or transceiver which comprises a transmitter and a receiver, having serial data transmission means and in each case at least

   - a physical level,
   - a transmitter-end check data production circuit,
   - a receiver-end check data comparison circuit, and
   - a circuit means (II.), arranged in the transmitter, for provoking erroneous transmitted data and/or erroneous check data,

   **characterized by** independent additional error recognition implemented at software level in the region of the receiver.

8. Circuit according to Claim 7, **characterized in that** transmitter-end changeover means (243, 245, 205, 206, 271) are present which can be used to change over between

   a) the production and subsequent transmission of erroneous transmitted data and/or erroneous check data and
   b) the transmission of unmodified data and check data.

9. Circuit according to Claim 7 or 8, **characterized in that** it is provided with means for carrying out the method according to at least one of Claims 1 to 6.

10. Circuit according to at least one of Claims 7 to 9, **characterized in that** the transmitter end is provided with a first data conditioning stage (I.), including a first check data production circuit, which can be used to forward data and check data without provoked errors, that is to say usually error-free data and check data, to the transmission output (Tx), and the transmitter end is provided with a second data conditioning stage (II.) having a check data production circuit, wherein the data conditioning stage comprises stimulation means which can be used to produce data errors and/or check data errors which can be forwarded to the transmission output (Tx).

11. Use of the circuit according to at least one of Claims 7 to 10 in motor vehicle controllers.

**Revendications**

1. Procédé de vérification dans lequel des données série protégées au moyen de données de vérification sont transférées par un bus de données série (106) d'un émetteur (303) à un récepteur (304), les données étant ensuite transformées au moins partiellement dans le récepteur et comparées aux données de vérification transmises pour détecter les erreurs de transmission, la même méthode de formation de données de vérification étant à la base de la production des données de vérification dans l'émetteur et du traitement des données dans le récepteur, la formation/le traitement des données de vérification s'effectuant par des moyens électroniques de détection d'erreur, des moyens logiciels (102) de détection d'erreur étant en outre prévus en particulier au niveau du récepteur en plus des moyens électroniques de détection d'erreur et permettant d'encore vérifier les données reçues,
**caractérisé en ce que**
une erreur dans les données transmises et/ou les données de vérification est provoquée par un moyen de stimulation d'erreur prévu du côté de l'émetteur.

2. Procédé selon la revendication 1, **caractérisé en ce qu'**un mauvais fonctionnement ou un défaut des moyens électroniques de détection d'erreur du récepteur sont détectés par recours à l'erreur produite sur les données par les moyens de stimulation d'erreur et/ou aux erreurs de données de vérification.

3. Procédé selon les revendications 1 ou 2, **caractérisé en ce que** les données de vérification sont formées en utilisant la méthode CRC.

4. Procédé selon au moins l'une des revendications 1 à 3, **caractérisé en ce que** les données erronées sont formées par modification des données à transmettre par les moyens de simulation d'erreur.

5. Procédé selon au moins l'une des revendications 1 à 4, **caractérisé en ce que** les erreurs provoquées sur les données sont formées par le fait que par transmission sans défaut, les moyens électroniques de détection d'erreur du récepteur peuvent détecter les erreurs de données de manière sûre ou ne peuvent pas les détecter de manière sûre.

6. Procédé selon au moins des revendications 1 à 5, **caractérisé en ce que** les moyens logiciels (102) de détection d'erreur du récepteur sont réalisés de telle sorte qu'ils détectent toujours les erreurs de données CRC provoquées à une distance de Hamming en dessous d'une valeur de seuil définie.

7. Circuit électronique d'émission ou de réception ou émetteur-récepteur qui comportent un émetteur et un récepteur, des moyens de transmission série de données et chacun au moins :

- un niveau physique,
- un circuit de formation de données de vérification prévu du côté de l'émetteur,
- un circuit de comparaison des données de vérification prévu du côté du récepteur et
- un moyen de circuit (II.) disposé dans l'émetteur et qui provoque des données erronées d'émission et/ou des données erronées de vérification,

**caractérisé par**
une détection indépendante supplémentaire des erreurs au niveau du récepteur, prévue au niveau logiciel.

8. Circuit selon la revendication 7, **caractérisé en ce qu'**il présente du côté de l'émetteur des moyens de commutation (243, 245, 205, 206, 271) qui permettent de basculer entre :

a) la production et ensuite la transmission de données d'émission erronées et/ou de données de vérification erronées et
b) la transmission de données et de données de vérification non modifiées.

9. Circuit selon les revendications 7 ou 8, **caractérisé en ce qu'**il est doté de moyens qui permettent d'exécuter le procédé selon au moins l'une des revendications 1 à 6.

10. Circuit selon au moins l'une des revendications 7 à 9, **caractérisé en ce qu'**il présente du côté émetteur un premier niveau (I.) de préparation des données qui inclut un premier circuit de formation de données de vérification par lequel des données et des données de vérification ne présentant pas d'erreurs provoquées, et donc en général des données et des données de vérification exemptes de défaut, peuvent être transmises à la sortie d'émission (Tx) et **en ce qu'**il présente du côté de l'émetteur un deuxième niveau (II.) de préparation de données qui présente un circuit de formation de données de vérification, le niveau de préparation des données comportant des moyens de stimulation qui permettent de produire des erreurs sur les données et/ou sur les données de vérification, ces erreurs pouvant être transmises à la sortie d'émission (Tx).

11. Utilisation du circuit selon au moins l'une des revendications 7 à 10 sur des appareils de commande de véhicules automobiles.

EP 2 160 857 B1

**Fig. 1**

**Fig. 2**

Fig. 3

EP 2 160 857 B1

| 301 | 302 | 301' | 300 | | | | |
|---|---|---|---|---|---|---|---|
| CRC Test Zeitschlitz | Normaler Betrieb | CRC Test Zeitschlitz | Normaler Betrieb | · · · · · | CRC Test Zeitschlitz | Normaler Betrieb | CRC Test Zeitschlitz | Normaler Betrieb |

$T_{NB}$

**Fig. 4**

303 → Sender

307  308  309  310  311  312  313

Zeit

306

Initialisierung

CRC Test Request

CRC Test Acknowledge

CRC Abfrage #1

CRC Fehlernachbildung

CRC Abfrage #2

CRC Fehlerfrei

CRC Test Antwort

Fenster schließen

CRC Test Ende

Empfänger

304

**Fig. 5**

401     402                                                                                              403

| Anfang CRC - Test | Wiederholung der Fehlernachbildung | Ende CRC - Test |

**Fig. 6**

EP 2 160 857 B1

Fig. 7

EP 2 160 857 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4130907 A1
- EP 1763168 A1
- DE 3335397 A1
- WO 2006058050 A2